Europäisches Patentamt

European Patent Office

Office européen des brevets

(11) Veröffentlichungsnummer : **0 377 804 B1**

# (12) EUROPÄISCHE PATENTSCHRIFT

(45) Veröffentlichungstag der Patentschrift :
**17.06.92 Patentblatt 92/25**

(51) Int. Cl.⁵ : **G01P 15/08,** G01P 15/12, G01P 1/00

(21) Anmeldenummer : **89120660.9**

(22) Anmeldetag : **08.11.89**

(54) **Beschleunigungssensor mit einseitig eingespanntem Biegebalken.**

(30) Priorität : **09.12.88 DE 3841451**
**01.09.89 DE 3929082**

(43) Veröffentlichungstag der Anmeldung :
**18.07.90 Patentblatt 90/29**

(45) Bekanntmachung des Hinweises auf die
Patenterteilung :
**17.06.92 Patentblatt 92/25**

(84) Benannte Vertragsstaaten :
**DE ES FR GB IT**

(56) Entgegenhaltungen :
**EP-A- 0 293 784**
**EP-A- 0 306 178**
**DE-A- 2 225 945**
**DE-A- 3 021 317**
**DE-A- 3 342 186**
**GB-A- 745 050**
**US-A- 2 552 722**
**US-A- 2 665 896**
**US-A- 3 636 774**
**US-A- 4 322 973**
**INSTRUMENTS AND CONTROL SYSTEMS,**
**Band 45, Nr. 9, Seiten 87-88; R.F. GIBSON et**
**al.: "Optimum damping for accelerometers"**

(73) Patentinhaber : **ALFRED TEVES GMBH**
**Guerickestrasse 7**
**W-6000 Frankfurt/Main 90 (DE)**

(72) Erfinder : **Juckenack, Dietrich, Dr.**
**Lohrbachstrasse 19**
**W-6380 Bad Homburg (DE)**
Erfinder : **Schildwächter, Matthias**
**Drei Lindenstrasse 26**
**W-6232 Bad Soden 2 (DE)**
Erfinder : **Büge, Klaus-Peter**
**Kohlwiese 3**
**W-6942 Mörlenbach 4 (DE)**
Erfinder : **Raab, Michael**
**Hügelstrasse 16**
**W-6200 Wiesbaden (DE)**
Erfinder : **Blumenstein, Gerhard**
**Kochstrasse 14**
**W-6000 Frankfurt/Main 70 (DE)**

(74) Vertreter : **Blum, Klaus-Dieter, Dipl.-Ing.**
**c/o ALFRED TEVES GMBH Guerickestrasse 7**
**W-6000 Frankfurt/Main 90 (DE)**

EP 0 377 804 B1

## Beschreibung

Die Erfindung bezieht sich auf einen Beschleunigungssensor mit einem einseitig eingespannten, in einem Gehäuse angeordneten Biegebalken, an dessen freiem Ende als träge Masse und als Signalgeber bzw. als signalverursachendes Element mindestens ein Permanentmagnet angeordnet ist und der in der Ebene der zu messenden Beschleunigung relativ zu dem Sensorgehäuse auslenkbar ist, sowie mit einem Meßsystem zur Bestimmung der Auslenkung, das aus dem oder den Permanentmagneten sowie aus einem oder mehreren magnetfeldempfindlichen, mit dem Gehäuse verbundenen Lagesensoren (sogen. Elementarsensoren) besteht, mit denen die Lage oder Lageänderung der Permanentmagneten ermittelbar ist.

Ein solcher Beschleunigungssensor ist in der deutschen Patentschrift DE 28 29 425 C2 beschrieben. In einem geschlossenen Gehäuse ist an einer einseitig im Gehäuse eingespannten Blattfeder eine seismische Masse aufgehängt. Diese seismische Masse befindet sich am freien Ende der eingespannten Blattfeder und besteht aus einem Weicheisenteil, das bei Auslenkung das Magnetfeld eines in Höhe dieses freien Endes am Gehäuse fest angeordneten Permanentmagneten stört. Mit Hilfe von zwei magnetfeldabhängigen ohmschen Widerständen, insbesondere Feldplatten, die symmetrisch zur Nullage der seismischen Masse und senkrecht zu den Feldlinien des Magnetfeldes im Luftspalt zwischen dem Permanentmagneten oder dessen Polschuhen und der seismischen Masse sowie senkrecht zur Bewegungsrichtung der seismischen Masse angeordnet sind, wird bei Auslenkung der Masse ein elektrisches Meßsignal erzeugt. Als seismische Masse kann auch anstelle des Weicheisenteils ein Permanentmagnet verwendet werden, wobei dann Weicheisenteile am Gehäuse befestigt werden.

Um mit einer solchen Vorrichtung auch bei kleinen Beschleunigungen ein brauchbares Meßsignal zu erhalten, ist ein erheblicher Herstellungsaufwand erforderlich. Die erforderlichen Kräfte zur Auslenkung der Blattfeder sind relativ hoch, was sich auf die erforderliche Größe der seismischen Masse auswirkt. Die Selektivität der Auslenkung in der Meßrichtung läßt zu wünschen übrig. Für eine Massenherstellung, z.B. für regelungstechnische Anwendungen in Automobilen, bei der meist mehrere gleichartige Sensoren benötigt werden und der Herstellungspreis eine entscheidende Rolle spielt, ist ein solcher Sensor daher nicht geeignet.

Aus der deutschen Patentschrift DE 31 33 056 C2 ist ebenfalls bereits ein Biegebalkensensor bekannt. In einem geschlossenen Gehäuse befindet sich ein Biegebalken in Form eines einseitig eingespannten, an dem Gehäuse angeschraubten elastischen Arms aus Epoxyharz, Vinylchlorid oder Berylkupfer. Das freie Ende des elastischen Arms ist durch ein Gewicht beschwert. Den elastischen Arm umgibt im unteren Teil, d.h. nahe der Befestigung am Gehäuse, eine Spule. Der Arm trägt in dem im Inneren der Spule liegenden Teil einen flachen Körper aus einem weichmagnetischen, amorphen Metall. Wird der elastische Arm durch eine Beschleunigung ausgelenkt oder gerät er in Schwingungen, führt die Verformung zu einer Zug- oder Druckbelastung in dem weichmagnetischen Körper, die ein entsprechendes elektrisches Signal an der Spule hervorruft. Diese Signale werden elektronisch in Beschleunigungs- oder Verzögerungswerte umgesetzt. Auch für solche Sensoren ist der Aufwand hoch, besonders dann, wenn eine hohe Meßgenauigkeit und Meßempfindlichkeit verlangt wird.

Des weiteren besitzt eine nach der Offenlegungsschrift DE 30 16 001 A1 bekannte Meßeinrichtung für die Fahrzeugverzögerung eine einseitig eingespannte Blattfeder, an derem freien Ende eine träge Masse und auf dieser ein Stabmagnet angeordnet sind. Mit Hilfe eines Hallelementes wird die Lageänderung des Stabmagnetes ermittelt. Ein zweiter, an dem Gehäuse befestigter Dauermagnet ist vorgesehen, um bei Auslenkung des Biegebalkens eine linear mit der Verzögerung ansteigende Spannung am Hallsensor abgreifen zu können.

Der Erfindung liegt nun die Aufgabe zugrunde, einen besonders einfach aufgebauten, mit geringem Aufwand herzustellenden Beschleunigungssensor zu schaffen, der eine hohe statische und dynamische Festigkeit (Wechselfestigkeit und Dauerfestigkeit) besitzt, unempfindlich gegen Überlastung ist und sich durch hohe Meßgenauigkeit und Meßempfindlichkeit in Meßrichtung auszeichnet. Die Steifigkeit in Querrichtung sollte dagegen hoch und damit die Querempfindlichkeit, d.h. die Empfindlichkeit quer zur Meßebene, sehr gering sein.

Es wurde festgestellt, daß sich diese Aufgabe mit einem Beschleunigungssensor der eingangs genannten Art lösen läßt, dessen Besonderheit darin besteht, daß der Biegebalken in Form eines dünnen, relativ zu seiner Dicke breiten Bandes ausgebildet und aus amorphem Metall (metallischem Glas) hergestellt ist.

Erfindungsgemäß wird also ein Beschleunigungssensor, der hohen Anforderungen genügt und dennoch mit geringen Kosten herzustellen ist, vor allem durch die Verwendung eines ein- oder mehrlagigen Biegebalkens erreicht, der in einer Richtung außerordentlich empfindlich, genau und linear auf Beschleunigungen reagiert, in der Querrichtung dagegen eine sehr hohe Biegesteifigkeit aufweist. Es läßt sich ohne weiteres eine Biegesteifigkeit in der Querachse zur Biegesteifigkeit in der Arbeitsebene im Verhältnis von 1:4000 erzielen.

Diese Eigenschaften werden mit einem dünnen Band aus amorphem Metall erreicht, wobei die magnetischen Eigenschaften des Metalles bei den meisten Ausführungsarten der Erfindung keine Rolle spielen. Wegen der Empfindlichkeit des aus dem amorphen Metall bestehenden, außerordentlich dünnen Bandes genügt es, als träge Masse und als signalverursachendes Element am freien Ende des Biegebalkens einen kleinen Permanentmagneten anzubringen, der in dem an geeigneter Stelle im oder am Sensorgehäuse angeordneten Lagesensor bei Auslenkung des Biegebalkens ein Signal hervorruft, das die Beschleunigung darstellt.

Nach einer vorteilhaften Ausführungsart der Erfindung liegt die Dicke des bandförmigen Biegebalkens im Bereich zwischen 10 und 80 µm, vorzugsweise zwischen 20 und 30 µm, und dessen Breite im Bereich zwischen 1 und 10 mm, vorzugsweise zwischen 2 und 4 mm. Wichtig ist dabei das Verhältnis der Biegebalkendicke zur Biegebalkenbreite, das zwischen 1:50 und 1:1000, vorzugsweise zwischen 1:50 und 1:200 betragen sollte.

Nach einer weiteren vorteilhaften Ausführungsart der Erfindung ist der Biegebalken mehrlagig ausgebildet und aus zwei oder mehreren parallelliegenden, aus dem amorphen Metall bestehenden Bändern zusamnengesetzt, die an der Einspannseite im Gehäuse fest zusammengehalten sind und auf deren freie Flächen am freien Ende des Biegebalkens Permanentmagnete derart angeordnet sind, daß die Bänder durch Magnetkraft zusammengehalten und aufeinandergedrückt werden. Auf den freien Außenflächen des mehrlagigen Biegebalkens werden zweckmäßigerweise je ein Permanentmagnet oder auf einer Seite ein Permanentmagnet, auf der anderen Seite ein ferromagnetischer Eisenkörper angeordnet.

Die Permanentmagneten und die ferromagnetischen Körper sind vorzugsweise auf den Biegebalken aufgeklebt.

Ist eine Seite bzw. Oberfläche des aus dem amorphen Metall bestehenden Bandes matter oder rauher als die andere, ist es zweckmäßig, diese Seiten aufeinanderzulegen, um bei der Relativverschiebung der einzelnen Bänder des mehrlagigen Biegebalkens eine möglichst hohe Dämpfung zu erzielen.

Ein weiteres Ausführungsbeispiel der Erfindung besteht darin, daß der Biegebalken aus zwei parallelliegenden, in der Einspannung fest zusammengehaltenen Bändern und auf dem amorphen Metall besteht, zwischen denen am freien Ende des Biegebalkens ein Permanentmagnet angeordnet und auf dem einen Band aufgeklebt ist, während das andere Band durch die magnetische Anziehungskraft an dem Permanentmagneten haftet. Bei Auslenkung des Biegebalkens wird dann durch die Verschiebung des magnetisch haftenden Bandes gegenüber dem Permanentmagneten die gewünschte Schwingungsdämpfung erreicht.

Zusätzlich zu der "Reibungsdämpfung" zwischen den Oberflächen der einzelnen Bänder des mehrlagigen Biegebalkens oder zwischen dem Biegebalken und dem nur auf einem Band angeklebten Permanentmagneten läßt sich erfindungsgemäß eine "Luftdämpfung" dadurch erreichen, daß der Biegebalken in einem geschlossenen Gehäuse derartig angeordnet ist, daß zwischen den Randflächen des Biegebalkens und der Gehäusewandung nur ein sehr schmaler Luftspalt bleibt, welcher bei Auslenkung des Biegebalkens den Luftaustausch behindert und dadurch die "Luftdämpfung" der Schwingung des Biegebalkens hervorruft.

Es ist auch denkbar, ausschließlich eine solche Luftdämpfung vorzusehen, so daß eine derartige Ausführungsart auch für mehrlagige Biegebalken in Frage kommt.

Andererseits kann zur Dämpfung der Schwingung des Biegebalkens das Sensorgehäuse in an sich bekannter Art mit einer Dämpfungsflüssigkeit, wie Silikonöl, gefüllt sein.

Die Permanentmagneten am Biegebalken des erfindungsgemäßen Beschleunigungssensors sind zweckmäßigerweise in Form von Plättchen, Quadern oder dergl. ausgebildet und an dem freien Ende des Biegebalkens angeordnet. Als magnetfeldempfindliche Lagesensoren sind Halleelemente, Feldplatten, magnetoresistive Sensoren oder andere magnetfeldempfindliche Sensoren vorgesehen, die in dem Sensorgehäuse parallel zu dem Biegebalken, unterhalb oder oberhalb des Biegebalkens, angeordnet sind. In anderen Ausführungsfällen sind die Lagesensoren in Höhe der freien Stirnseite des Biegebalkens frontal und/oder seitlich an dem Sensorgehäuse befestigt.

Schließlich ist es noch möglich, die Lagesensoren an der Außenwandung oder außerhalb des Sensorgehäuses im Bereich der magnetischen Feldlinien der Permanentmagneten, die mit dem Biegebalken schwingen, anzuordnen.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen

Fig. 1 in schematisch vereinfachter Darstellungsweise im Querschnitt einen Beschleunigungssensor nach der Erfindung,

Fig. 2 in gleicher Darstellungsweise eine andere Ausführungsart eines Beschleunigungssensors, nämlich mit gegenüberliegenden Lagesensoren,

Fig. 3 in gleicher Darstellungsweise wie Fig. 1 einen Beschleunigungssensor mit frontal angeordnetem Lagesensor,

Fig. 4.1 in gleicher Darstellungsweise wie Fig. 1 einen Beschleunigungssensor mit einem mehrlagigen Biegebalken,

Fig. 4.2 in vergrößerter Dartellung das freie Ende des Biegebalkens nach Fig. 4.1 mit einem Permanentmagneten und einem Gegenstück,

Fig. 5 einen ähnlichen Sensor wie Fig. 4, jedoch mit zwei Permanentmagneten am freien Ende,

Fig. 6 einen zweilagigen Biegebalken, bei dem der Permanentmagnet zwischen den Lagen angeordnet ist,

Fig. 7.1 einen Sensor mit Luftdämpfung im Querschnitt parallel zur Schwingungsebene des Biegebalkens und

Fig. 7.2 im Schnitt entlang den Linien A-A in Fig. 7.1, also senkrecht zur Schwingungsebene, den Sensor nach Fig. 7.1

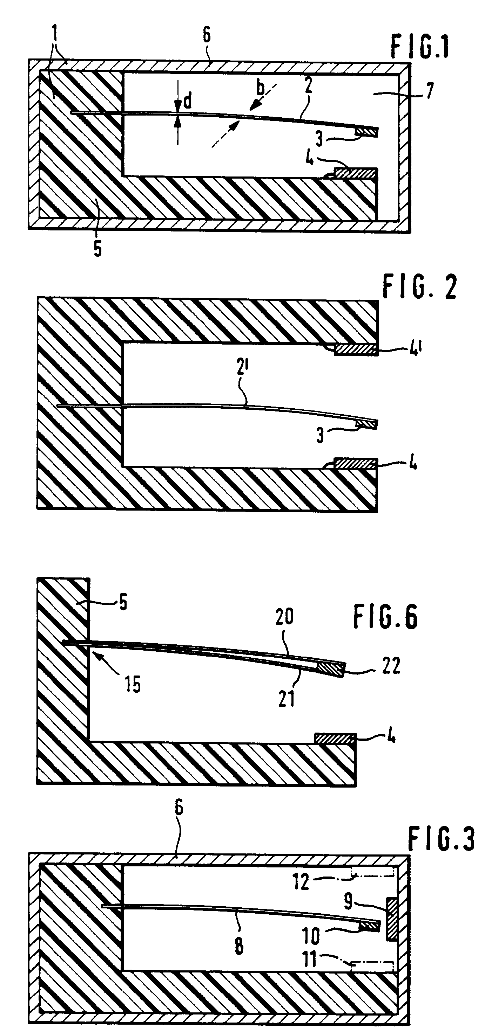

Wie Fig.1 zeigt, besteht der erfindungsgemäße Beschleunigungssensor im wesentlichen aus einem Gehäuse 1, einem Biegebalken 2 und einem Meßsystem 3 + 4, das sich wiederum aus einem Signalgeber bzw. signalverursachendes Element 3, nämlich einem Permanentmagneten, und aus einem Lagesensor oder sogen. Elementarsensor 4 zusammensetzt. Die dazugehörige Elektronik zur Auswertung der elektrischen Signale ist der Übersichtlichkeit wegen nicht gezeigt.

Zu dem Sensorgehäuse 1 gehören ein Kunststoffkörper 5, der zur Halterung des einseitig eingespannten Biegebalkens 2 dient, und eine geschlossene Ummantelung 6, die es ermöglicht, den Biegebalken 2 zur Dämpfung der Schwingung in Silikonöl, das den ganzen Hohlraum 7 füllt, einzubetten.

Der Biegebalken 2 besteht aus einem dünnen Band aus einem amorphen Metall, das in einer Richtung, das ist bei den dargestellten Beschleunigungssensoren die Zeichenebene, bereits auf sehr geringe Beschleunigungen reagiert, während es in der Querrichtung, also senkrecht zur Zeichenebene, eine außerordentlich hohe Biegesteifigkeit aufweist. Mit einer Banddicke d von ca. 30 μm und einer Breite b (senkrecht zur Zeichenebene) von 3 mm läßt sich beispielsweise erreichen, daß sich die Biegesteifigkeit um die weiche Achse (Querachse) zur Biegesteifigkeit um die steife Achse (Hochachse) wie 1:4000 verhält. Darüber hinaus liefert die rechnerische Abschätzung der sogenannten Biegebalken-Kippgefahr (Instabilitätsproblem) bei Vibration in Richtung der steifen Achse (Hochachse) einen ausreichend großen Abstand zu den zu erwartenden Störanregungen in Querrichtung.

Der Biegebalken 2 ist auf einer Seite, nämlich in dem Kunststoffkörper 1, eingebettet, während sein anderes Ende frei schwingen kann. An diesem freien Ende ist als träge Masse und als Signalgeber der Permanentmagnet 3 angeordnet, z.B. angeklebt. Ist das amorphe Metall, aus dem der Balken 2 besteht, magnetisch, haftet der Permanentmagnet 3 bereits durch seine magnetische Anziehungskraft an dem Biegebalken 2.

Die Auslenkung des Biegebalkens 2 und insbesondere des Permanentmagneten 3 am freien Ende des Biegebalkens läßt sich mit einem Lagesensor 4, der ein Hall-Effekt Sensor-Element darstellt oder einen magnetoresistiven Widerstand enthält, messen und in ein entsprechendes elektrisches Signal umsetzen.

Fig. 2 zeigt ein Ausführungsbeispiel der Erfindung, bei dem das mit dem Permanentmagneten 3 beschwerte freie Ende des Biegebalkens 2′ zwischen zwei Lagesensoren 4,4′ schwingen kann. In beiden Lagesensoren 4,4′ ändert sich folglich bei einer Auslenkung des Biegebalkens 2′ das Signal in entgegengesetzter Richtung. Die Auswertung der Signale bzw. die Unterscheidung in Stör- und Nutzsignale wird dadurch erheblich vereinfacht und die Funktionssicherheit des Beschleunigungssensors erhöht (Redundanz). Ansonsten besteht kein grundsätzlicher Unterschied zu dem Beschleunigungssensor nach Fig. 1.

In dem Ausführungsbeispiel der Erfindung nach Fig. 3 ist ein Lagesensor 9 an der Stirnseite des freien Endes eines Biegebalkens 8 angeordnet. Die Lageänderung des Permanentmagneten 10 am freien Ende des Biegebalkens 8 infolge einer Beschleunigung führt auch in dem an der Stirnseite angeordneten Lagesensor 9 zu einem auswertbaren Signal.

Es ist auch möglich, zusätzlich zu dem frontalen Lagesensor 9 weitere, in Schwingungsrichtung unten und-/oder oben angeordnete Lagesensoren 11,12 vorzusehen, um die Signalauflösung zu verbessern. Die Sensoren 11,12 wurden in Fig. 3 gestrichelt dargestellt, weil für manche Anwendungsfälle diese zusätzlichen Sensoren überflüssig sind.

Ferner ist es in vielen Fällen günstig, die Lagesensoren außen oder außerhalb der Ummantelung 6 des Sensorgehäuses 1 anzuordnen, wenn sichergestellt ist, daß die Änderungen des Magnetfeldes bei Lageänderung des Permanentmagneten 3,10 auch außerhalb des Sensorgehäuses meßbar sind.

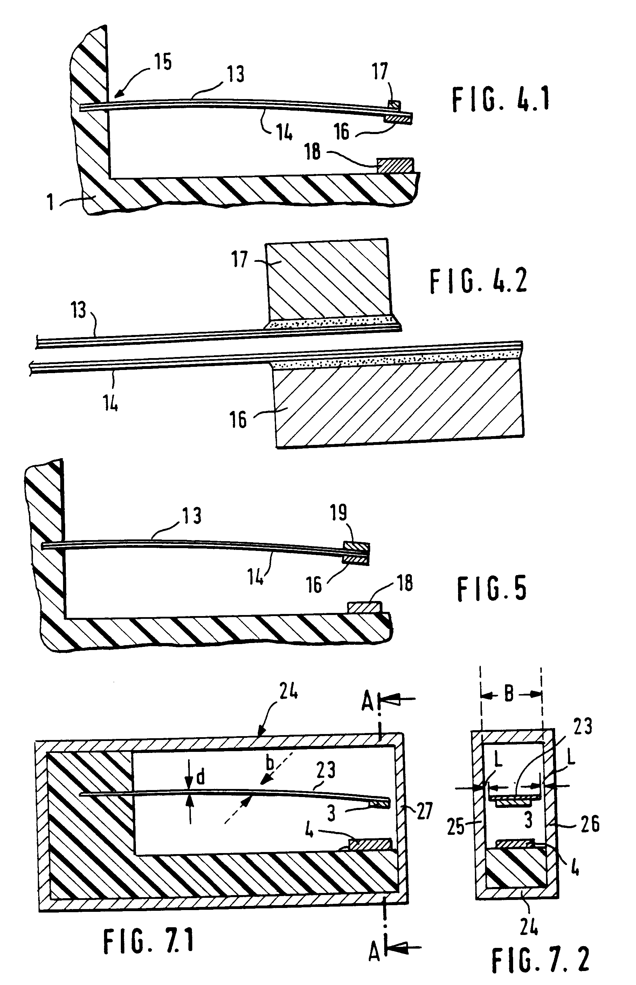

Ein mehrlagiger Biegebalken, bestehend aus zwei oder mehreren parallelliegenden, aus dem amorphen Metall gefertigten Bändern 13,14, ist in dem Ausführungsbeispiel der Erfindung nach Fig. 4.1 vorgesehen. Fig. 4.2 zeigt in vergrößertem Maßstab und auseinandergezogen das freie Ende des Biegebalkens 13+14.

Durch eine solche Anordnung wird eine "Reibungsdämpfung" der Schwingungen erreicht. Die parallel liegenden Bänder 13,14 sind nämlich zusammen auf der Einspannseite 15 in dem Kunststoffkörper 5 eingebettet und fest eingespannt. Am freien Ende des Biegebalkens 13+14 werden die beiden Bänder 13,14 durch Magnetkraft zusammengehalten und zusammengedrückt. Hierzu ist auf der einen freien Oberfläche ein Permanentmagnet 16 aufgesetzt und aufgeklebt, der ein Gegenstück, nämlich einem auf die andere, die gegenüberliegende freie Oberfläche am freien Ende des Biegebalkens 13+14 aufgeklebten ferromagnetischen Körper 17 magnetisch anzieht. Bei Auslenkung des Biegebalkens 13+14 werden daher die beiden aufeinanderliegenden Lagen oder Bänder 13,14 gegeneinander verschoben, wodurch die gewünschte Reibungsdämpfung entsteht.

Besitzen die einzelnen Bänder 13,14 unterschiedlich rauhe Seiten, ist es zweckmäßig, zur Erhöhung der Dämpfung die rauhen Seiten, die oft als matte Seiten im Gegensatz zu der glänzenden zweiten Oberfläche in Erscheinung treten, aufeinanderzulegen. Es könnte auch zweckmäßig sein, die aufeinanderliegende Oberflächen der Bänder 13,14 aufzurauhen, sofern dies mit vertretbarem Aufwand durchzuführen ist.

Ein Elementarsensor 18 ist hier wiederum nur auf einer Seite des Biegebalkens angeordnet, doch kann auch von den anhand der Fig. 3 beschriebenen Alternativen Gebrauch gemacht werden.

Fig. 5 unterscheidet sich von dem Ausführungsbeispiel nach Fig. 4 nur dadurch, daß anstelle eines ferromagnetischen Körpers (17) ein zweiter Permanentmagnet 19 als Gegenstück vorgesehen ist. Natürlich sind beide Permanentmagnete 16,19 derart angeordnet, daß sie sich anziehen.

Nach Fig. 6 besteht der Biegebalken zwar wiederum aus zwei zusammen in den Kunststoffkörper 5 eingebetteten Bändern 20,21 aus amorphem Metall. In diesem Fall ist jedoch ein Permanentmagnet 22 am freien Ende des Biegebalkens 20+21 zwischen den beiden Bändern 20,21 angeordnet. Der Permanentmagnet 22 ist auf einem der beiden Bänder festgeklebt, während er an dem anderen Band durch magnetische Anziehungskraft haftet. Die gewünschte Schwingungsdämpfung entsteht auch in diesem Fall durch Reibung, und zwar durch die Reibung zwischen dem Permanentmagneten 22 und dem magnetisch haftenden Band, das sich bei Auslenkung des Biegebalkens 20+21 auf dem Permanentmagnet-Körper 22 verschiebt.

Weitere Varianten und Formgebungen zum Erzielen einer Reibungsdämpfung sind möglich.

Fig. 7.1 und 7.2 zeigen in zwei verschiedenen Ansichten einen Beschleunigungssensor, bei dem ausschließlich oder zusätzlich eine "Luftdämpfung" der Schwingungen erreicht wird. Im Querschnitt nach Fig. 7.1 gleicht der Sensor der bereits anhand der Fig. 1 beschriebenen Ausführungsart. Wie Fig. 7.2 zeigt, befindet sich jedoch in diesem Fall der Biegebalken 23 in einem Gehäuse 24, dessen Innenraum, insbesondere dessen Breite B derart auf die Breite b des Biegebalkens 23 abgestimmt ist, daß im stationären Zustand und bei einer Auslenkung des Biegebalkens 23 infolge einer Beschleunigung zwischen den Wandungen 25,26 und 27, d.h. den Seitenwandungen 25,26 und der Stirnwandung 27, nur ein sehr enger Luftspalt L bleibt. Dieser Luftspalt L ist so bemessen, daß der Biegebalken 23 bei seiner Auslenkung die Wandungen gerade nicht berührt. Andererseits soll der Luftspalt L so gering sein, daß bei der Auslenkung des Biegebalkens in diesem geschlossenen Gehäuse 24 die Luftverdrängung durch diesen Luftspalt hindurch gedrosselt und dadurch die Schwingung gedämpft wird. Durch Einstellung des Luftspaltes läßt sich die gewünschte Dämpfung auf den gewünschten Wert einstellen.

Die beschriebene Reibungs- und die Luftdämpfung lassen sich erforderlichenfalls kombinieren, um auf einfache Weise die gewünschte Dämpfungscharakteristik des Beschleunigungssensors zu erzielen.

## Patentansprüche

1. Beschleunigungssensor mit einem einseitig eingespannten, in einem Gehäuse angeordneten Biegebalken, an dessen freiem Ende als träge Masse und als Signalgeber bzw. als signalverursachendes Element mindestens ein Permanentmagnet angeordnet ist und der in der Ebene der zu messenden Beschleunigung relativ zu dem Sensorgehäuse auslenkbar ist, sowie mit einem Meßsystem zur Bestimmung der Auslenkung, das aus dem oder den Permanentmagneten sowie aus einem oder mehreren magnetfeldempfindlichen, mit dem Gehäuse verbundenen Lagesensoren besteht, mit denen die Lage oder Lageänderung der Permanentmagneten ermittelbar ist, dadurch **gekennzeichnet,** daß der Biegebalken (2,2′,8,13+14,20+21,23) in Form eines dünnen, relativ zu der Dicke (d) breiten (b) Bandes ausgebildet und aus amorphem Metall (metallischem Glas) hergestellt ist.

2. Beschleunigungssensor nach Anspruch 1, dadurch **gekennzeichnet,** daß die Dicke (d) des bandförmigen Biegebalkens (2,2′,8,13+14,20+21,23) im Bereich zwischen 10 und 80 µm, vorzugsweise 20 bis 30 µm, und dessen Breite (b) im Bereich zwischen 1 und 10 mm, vorzugsweise zwischen 2 und 4 mm, liegt.

3. Beschleunigungssensor nach Anspruch 1 oder 2, dadurch **gekennzeichnet,** daß das Verhältnis der Biegebalkendicke (d) zur Biegebalkenbreite (b) zwischen 1:50 und 1:1000, vorzugsweise zwischen 1:50 und 1:200, liegt.

4. Beschleunigungssensor nach einem oder mehreren der Ansprüche 1 bis 3, dadurch **gekennzeichnet,** daß der Biegebalken (13+14,20+21) mehrlagig ausgebildet und aus zwei oder mehreren parallelliegenden, aus dem amorphen Metall bestehenden Bändern (13,14,20,21) zusammengesetzt ist, die an der Einspannseite (15) im Gehäuse (1) fest zusammengehalten sind und auf deren freie Flächen am freien Ende des Biegebalkens Permanentmagnete (16,19) derart angeordnet sind, daß die Bänder durch Magnetkraft zusammengehalten und aufeinandergedrückt werden.

5. Beschleunigungssensor nach Anspruch 4, dadurch **gekennzeichnet,** daß auf den freien Außenflächen des mehrlagigen Biegebalkens gegenüber auf einer Seite ein Permanentmagnet (16), auf der anderen Seite ein ferromagnetischer Körper (17) angeordnet sind.

6. Beschleunigungssensor nach Anspruch 4, dadurch **gekennzeichnet,** daß auf den freien Außenflächen des mehrlagigen Biegebalkens gegenüber je ein Permanentmagnet (16,19) angeordnet ist.

7. Beschleunigungssensor nach einem oder mehreren der Ansprüche 4 bis 6, dadurch **gekennzeichnet,** daß die Permanentmagneten (16,19) und/oder die ferromagnetischen Körper (17) aufgeklebt sind.

8. Beschleunigungssensor nach einem oder mehreren der Ansprüche 4 bis 7, dadurch **gekennzeichnet,** daß die Bänder (13,14,20,21) derart angeordnet sind, daß die vergleichsweise matten oder rauheren Oberflächen der Bänder (13,14,20,21) aufeinanderliegen.

9.Beschleunigungssensor nach einem oder mehreren der Ansprüche 4 bis 7, dadurch **gekennzeichnet,** daß die aufeinanderliegenden Oberflächen der Bänder (13,14,20,21) aufgerauht sind.

10. Beschleunigungssensor nach einem oder mehreren der Ansprüche 1 bis 3, dadurch **gekennzeichnet,** daß der Biegebalken (20+21) aus zwei parallelliegenden, in der Einspannung (15) fest zusammengehaltenen Bändern (20,21) aus dem amorphen Metall besteht, zwischen denen am freien Ende des Biegebalkens ein Permanentmagnet (22) angeordnet und gehaltert ist.

11. Beschleunigungssensor nach Anspruch 10, dadurch **gekennzeichnet,** daß der Permanentmagnet (22) auf dem einen Band aufgeklebt ist und an dem anderen Band magnetisch haftet.

12. Beschleunigungssensor nach einem oder mehreren der Ansprüche 1 bis 11, dadurch **gekennzeichnet,** daß der Biegebalken (23) in einem geschlossenen Gehäuse (24) derart angeordnet ist, daß zwischen den Randflächen des Biegebalkens (23) und der Gehäusewandung (25,26,27) nur ein sehr schmaler Luftspalt (L) bleibt, welcher bei der Auslenkung des Biegebalkens (23) den Luftdurchfluß drosselt und dadurch eine Dämpfung der Schwingung des Biegebalkens (23) hervorruft.

13. Beschleunigungssensor nach einem oder mehreren der Ansprüche 1 bis 11, dadurch **gekennzeichnet,** daß das Sensorgehäuse (1) zur Dämpfung der Schwingungen des Biegebalkens (2,2',8) mit einer Dämpfungsflüssigkeit, wie Silikonöl, gefüllt ist.

14. Beschleunigungssensor nach einem oder mehreren der Ansprüche 1 bis 13, dadurch **gekennzeichnet,** daß die Permanentmagneten (3,10,16,19,22) in Form von Plättchen, Quadern oder dergl. ausgebildet und an dem freien Ende des Biegebalkens (2,2',8,13+14,20+21,23) angeordnet sind.

15. Beschleunigungssensor nach einem oder mehreren der Ansprüche 1 bis 14, dadurch **gekennzeichnet,** daß als magnetfeldempfindliche Lagesensoren (4,4',9,11,12,18) Hallelemente, Feldplatten, magnetoresisitive Sensoren oder andere magnetfeldempfindliche Sensoren vorgesehen und in dem Sensorgehäuse parallel zu dem Biegebalken (2,2',8,13+14,20+21,23) unterhalb und/oder oberhalb des Biegebalkens, angeordnet sind.

16. Beschleunigungssensor nach einem oder mehreren der Ansprüche 1 bis 15, dadurch **gekennzeichnet,** daß die Lagesensoren (9) in Höhe der freien Stirnseite des Biegebalkens (8), frontal und/oder seitlich in dem Sensorgehäuse (6) angeordnet sind.

17. Beschleunigungssensor nach einem oder mehreren der Ansprüche 1 bis 16, dadurch **gekennzeichnet,** daß die Lagesensoren an der Außenwandung oder außerhalb des Sensorgehäuses (1,24) im Bereich der magnetischen Feldlinien der Permanentmagneten (3,10,16,19,22) angeordnet sind.

## Claims

1. An acceleration sensor with a unilaterally clamped bending beam, arranged in a housing, on the free end of said bending beam at least one permanent magnet being arranged as inert mass and as a signal generator, or rather as a signal-causing element, and said bending beam being deflectable relative to the sensor housing in the plane of the acceleration to be measured, as well as with a measuring system for determining the deflection, said system consisting of the permanent magnet(s) as well as of one or of a plurality of magnetic-field-sensitive position sensors connected with the housing, by means of which sensors the position or change in position of the permanent magnets is determinable, **characterized** in that the bending beam (2, 2', 8, 13+14, 20+21, 23) has the design of a thin tape which is wide (b) relative to the thickness (d) and is made of amorphous metal (metallic glass).

2. An acceleration sensor as claimed in claim 1, **characterized** in that the thickness (d) of the tape-shaped bending beam (2, 2', 8, 13+14, 20+21, 23) lies in the range of between 10 and 80 $\mu$m, preferably 20 to 30 $\mu$m, and in that its width (b) lies in the range of between 1 and 10 mm, preferably between 2 and 4 mm.

3. An acceleration sensor as claimed in claim 1 or in claim 2, **characterized** in that the ratio of the bending beam's thickness (d) to the bending beam's width (b) lies between 1:50 and 1:1000, preferably between 1:50 and 1:200.

4. An acceleration sensor as claimed in any one or in several of claims 1 through 3, **characterized** in that the bending beam (13+14, 20+21) has a multi-layer design and is composed of two or more tapes (13, 14, 20, 21) lying parallel and consisting of the amorphous metal and firmly held together on the clamping side (15) in the housing (1), permanent magnets (16, 19) being arranged on said tapes free surfaces on the free end of the bending beam so that the tapes are held together and are pressed onto one another by magnetic force.

5. An acceleration sensor as claimed in claim 4, **characterized** in that, oppositely, on the free outside surfaces of the multi-layer bending beam, a permanent magnet (16) is arranged on the one side and a ferromagnetic body (17) is arranged on the other side.

6. An acceleration sensor as claimed in claim 4, **characterized** in that, oppositely, one permanent magnet (16, 19) each is arranged on the free outside surfaces of the multi-layer bending beam.

7. An acceleration sensor as claimed in any one or in several of claims 4 through 6, **characterized** in that the permanent magnets (16, 19) and/or the ferromagnetic bodies (17) are glued on.

8. An acceleration sensor as claimed in any one or in several of claims 4 through 7, **characterized** in that the tapes (13, 14, 20, 21) are arranged so that the comparatively mat or rougher surfaces of the tapes (13, 14, 20, 21) are lying on top of one another.

9. An acceleration sensor as claimed in any one or in several of claims 4 through 7, **characterized** in that the tapes (13, 14, 20, 21) surfaces lying on top of one another are roughened.

10. An acceleration sensor as claimed in any one or in several of claims 1 through 3, **characterized** in that the bending beam (20 + 21) consists of two tapes (20, 21) of the amorphous metal which lie parallel and are firmly held together in the clamp (15) and between which a permanent magnet (22) is arranged and held on the free end of the bending beam.

11. An acceleration sensor as claimed in claim 10, **characterized** in that the permanent magnet (22) is glued onto one of the tapes and magnetically adheres to the other tape.

12. An acceleration sensor as claimed in any one or in several of claims 1 through 11, **characterized** in that the bending beam (23) is arranged in a closed housing (24) such as to ensure that there remains but a very narrow air gap (L) between the boundaries of the bending beam (23) and the housing walls (25, 26, 27), said air gap throttling the air flow upon the deflection of the bending beam (23) and thus causing the vibration of the bending beam (23) to be damped.

13. An acceleration sensor as claimed in any one or in several of claims 1 through 11, **characterized** in that the sensor housing (1) is filled with a damping fluid such as silicon oil for the purposes of damping the vibrations of the bending beam (2, 2′, 8).

14. An acceleration sensor as claimed in any one or in several of claims 1 through 13, **characterized** in that the permanent magnets (3, 10, 16, 19, 22) have the design of plates, blocks or the like and are arranged on the free end of the bending beam (2, 2′, 8, 13+14, 20+21, 23).

15. An acceleration sensor as claimed in any one or in several of claims 1 through 14, **characterized** in that Hall elements, magnetoresistors, magnetoresistive sensors or other magnetic-field-sensitive sensors are provided as magnetic-field-sensitive position sensors (4, 4′, 9, 11, 12, 18) and are arranged parallel to the bending beam (2, 2′, 8, 13+14, 20+21, 23), below and/or above the bending beam, within the sensor housing.

16. An acceleration sensor as claimed in any one or in several of claims 1 through 15, **characterized** in that the position sensors (9) are arranged frontally or laterally in the sensor housing (6) on the level of the free front face of the bending beam (8).

17. An acceleration sensor as claimed in any one or in several of claims 1 through 16, **characterized** in that the position sensors are arranged on the outside walls or outside the sensor housing (1, 24) in the area of the magnetic field lines of the permanent magnets (3, 10, 16, 19, 22).

## Revendications

1. Détecteur d'accélération, avec une barre flexible disposée dans un boîtier, encastrée d'un côté, à l'extrémité libre de laquelle au moins un aimant permanent est disposé comme masse inerte et comme transmetteur de signal ou élément générateur de signal, et qui peut être déviée par rapport au boîtier du détecteur dans le plan de l'accélération à mesurer, ainsi qu'avec un système de mesure pour déterminer la déviation, qui est constitué du ou des aimants permanents ainsi que d'un ou plusieurs détecteurs de position, réagissant aux champs magnétiques et assemblés au boîtier, qui permettent de déterminer la position ou modification de position des aimants permanents, **caractérisé** en ce que la barre flexible (2,2′,8,13+14,20+21,23) est configurée sous la forme d'une mince bande, large (b) par rapport à l'épaisseur (d), et réalisée en métal amorphe (verre métallique).

2. Détecteur d'accélération selon la revendication 1, caractérisé en ce que l'épaisseur (d) de la barre flexible en forme de bande (2,2′,8,13+14,20+21,23) se situe entre 10 et 80 μm, de préférence 20 à 30 μm, et sa

largeur (b) entre 1 et 10 mm, de préférence entre 2 et 4 mm.

3. Détecteur d'accélération selon la revendication 1 ou 2, caractérisé en ce que le rapport de l'épaisseur (d) à la largeur (b) de la barre flexible se situe entre 1:50 et 1:1000, de préférence entre 1:50 et 1:200.

4. Détecteur d'accélération selon l'une ou plusieurs des revendications 1 à 3, caractérisé en ce que la barre flexible (13+14,20+21) est réalisée en plusieurs couches et est composée de deux ou plusieurs bandes (13,14,20,21) constituées du métal amorphe et disposées parallèlement, qui sont conjointement maintenues fixement du côté d'encastrement (15) dans le boîtier (1) et sur les faces libres desquelles, à l'extrémité libre de la barre flexible, des aimants permanents (16,19) sont disposés de telle sorte que les bandes sont pressées l'une sur l'autre et maintenues réunies par la force magnétique.

5. Détecteur d'accélération selon la revendication 4, caractérisé en ce que, sur les faces extérieures libres de la barre flexible à plusieurs couches, sont disposés en face l'un de l'autre, d'un côté un aimant permanent (16), et de l'autre côté un corps ferromagnétique (17).

6. Détecteur d'accélération selon la revendication 4, caractérisé en ce que, sur les faces extérieures libres de la barre flexible à plusieurs couches, des aimants permanents respectifs (16,19) sont disposés en face l'un de l'autre.

7. Détecteur d'accélération selon l'une ou plusieurs des revendications 4 à 6, caractérisé en ce que les aimants permanents (16,19) et/ou les corps ferromagnétiques (17) sont collés.

8. Détecteur d'accélération selon l'une ou plusieurs des revendications 4 à 7, caractérisé en ce que les bandes (13,14,20,21) sont disposées de telle sorte que les surfaces comparativement mates ou plus rugueuses des bandes (13,14,20,21) reposent l'une sur l'autre.

9. Détecteur d'accélération selon l'une ou plusieurs des revendications 4 à 7, caractérisé en ce que les surfaces des bandes (13,14,20,21) qui reposent l'une sur l'autre sont rendues rugueuses.

10. Détecteur d'accélération selon l'une ou plusieurs des revendications 1 à 3, caractérisé en ce que la barre flexible (20+21) est constituée de deux bandes (20,21) du métal amorpbe disposées parallèlement, conjointement maintenues fixement dans l'encastrement (15), entre lesquelles, à l'extrémité libre de la barre flexible, un aimant permanent (22) est disposé et maintenu.

11. Détecteur d'accélération selon la revendication 10, caractérisé en ce que l'aimant permanent (22) est collé sur l'une des bandes et adhère magnétiqueuent à l'autre bande.

12. Détecteur d'accélération selon l'une ou plusieurs des revendications 1 à 11, caractérisé en ce que la barre flexible (23) est disposée dans un boîtier fermé (24) de telle sorte qu'il ne reste entre les faces de bords de la barre flexible (23) et la paroi (25,26,27) du boîtier qu'une très étroite fente d'air (L), qui étrangle l'écoulement d'air lors de la déviation de la barre flexible (23) et produit ainsi un amortisseuent de la vibration de la barre flexible (23).

13. Détecteur d'accélération selon l'une ou plusieurs des revendications 1 à 11, caractérisé en ce que le boîtier (1) du détecteur est, afin d'amortir les vibrations de la barre flexible (2,2',8), rempli d'un liquide d'amortissement tel que de l'huile au silicone.

14. Détecteur d'accélération selon l'une ou plusieurs des revendications 1 à 13, caractérisé en ce que les aimants permanents (3,10,16,19,22) sont réalisés en forme de plaquettes, parallélépipèdes ou similaires et sont disposés à l'extrémité libre de la barre flexible (2,2',8,13+14,20+21,23).

15. Détecteur d'accélération selon l'une ou plusieurs des revendications 1 à 14, caractérisé en ce que des éléments à effet Hall, des magnétorésistances, des détecteurs à effet magnétorésistif ou autres détecteurs réagissant aux champs magnétiques sont prévus comme détecteurs de position (4,4',9,11,12,18) réagissant aux champs magnétiques et sont disposés parallèlement à la barre flexible (2,2',8,13+14,20+21,23) dans le boîtier du détecteur, en dessous et/ou au-dessus de la barre flexible.

16. Détecteur d'accélération selon l'une ou plusieurs des revendications 1 à 15, caractérisé en ce que les détecteurs de position (9) sont disposés à hauteur du côté frontal libre de la barre flexible (8) dans le boîtier (6) du détecteur, frontalement et/ou latéralement.

17. Détecteur d'accélération selon l'une ou plusieurs des revendications 1 à 16, caractérisé en ce que les détecteurs de position sont disposés sur la paroi extérieure ou en dehors du boîtier (1,24) du détecteur, dans la région des lignes de flux magnétique des aimants permanents (3,10,16,19,22).

FIG.1

FIG. 2

FIG.6

FIG.3

FIG. 4.1

FIG. 4.2

FIG. 5

FIG. 7.1

FIG. 7.2